**Europäisches Patentamt**

**European Patent Office**

**Office européen des brevets**

(19)

(11) Numéro de publication: **0 149 396**
**B1**

## FASCICULE DE BREVET EUROPEEN

(12)

(45) Date de publication du fascicule du brevet:
**09.03.88**

(51) Int. Cl.⁴: **C 09 K 3/32**, C 02 F 1/68

(21) Numéro de dépôt: **84402719.3**

(22) Date de dépôt: **26.12.84**

(54) **Matériau solide à propriétés oléophiles et hydrofuges et son utilisation pour l'absorption d'hydrocarbures.**

(30) Priorité: **27.12.83 FR 8320825**

(43) Date de publication de la demande:
**24.07.85 Bulletin 85/30**

(45) Mention de la délivrance du brevet:
**09.03.88 Bulletin 88/10**

(84) Etats contractants désignés:
**AT BE CH DE FR GB IT LI LU NL SE**

(56) Documents cités:
**EP - A - 0 006 776**
**FR - A - 1 391 144**
**FR - A - 2 420 561**
**FR - A - 2 440 777**
**GB - A - 1 282 411**

(73) Titulaire: **LAFARGE COPPEE, 28, rue Emile Ménier,**
**F-75782 Paris Cedex 16 (FR)**

(72) Inventeur: **Chappuis, Jàcques, 7 Square Guillaume**
**Apollinaire, Elancourt, F-78310 Maurepas (FR)**

(74) Mandataire: **Hirsch, Marc-Roger, Cabinet Hirsch 34 rue**
**de Bassano, F-75008 Paris (FR)**

# Description

La présente invention a pour objet un matériau solide ayant des propriétés oléophiles et hydrofuges. Elle se rapporte également à son utilisation pour l'absorption d'hydrocarbures, fuels, huiles ou graisses polluant la surface des eaux.

Les produits couramment employés pour le nettoyage des plans d'eaux douces ou marines polluées par les hydrocarbures consistent en des agents dispersants, coulants, agglomérants et absorbants.

L'emploi de tels produits pour l'absorption des hydrocarbures est connu notamment de FR-A-2 420 561, GB-A-1 282 411 et EP-A-0 006 776.

Dans le cas de l'emploi de dispersants ou d'agents coulants, les matières polluantes ne sont pas retirées de l'eau mais sont, soit dispersées dans l'eau, soit envoyées au fond de l'eau, ce qui a, dans les deux cas, une incidence néfaste sur la flore et la faune marines.

Les agents agglomérants ne peuvent être utilisés que sur des hydrocarbures de viscosité élevée et ne conviennent pas pour des huiles de viscosité faible ou moyenne ou pour des pétroles de type «arabian light» par exemple. Leur emploi est donc limité à certains types de pollution. Les agents absorbants généralement sont de deux types:

– d'une part ceux formés de mats de fibres chimiques ou naturelles absorbant les hydrocarbures; cependant, ces agents ont un coût élevé et leur capacité d'absorption n'est pas «stable», une partie des huiles et graisses absorbées se libérant trop aisément et leur incinération provoquant quelque fois la libération de gaz toxiques.

– d'autre part, ceux obtenus à partir de produits de nature minérale; ces agents nécessitent cependant dans certains cas, pour leur préparation, un traitement à la température de frittage du mélange silice-alumine, donc de l'ordre de 1300–1400°C et, en outre, présentent l'inconvénient de couler au fond de l'eau après absorption de l'huile de surface.

De plus, ces agents connus posent des problèmes quant à leur destruction postérieure ou à leur utilisation pour l'élimination des déchets hydrocarbonés et, jusqu'à ce jour, aucune solution satisfaisante et économique pour cette destruction n'a été proposée.

La présente invention se propose de pallier les inconvénients des matériaux connus et a pour objet un matériau solide nouveau:

– conservant des caractéristiques de flottabilité à la surface de l'eau après absorption des hydrocarbures flottants à la surface des eaux, ces matériaux ne coulant pas étant susceptibles d'être aisément récupérés;

– susceptible d'absorber une quantité d'huile importante, supérieure à son propre poids;

– n'absorbant pas de quantités appréciables d'eau;

– susceptible de donner lieu à une absorption stable, donc ne donnant pas lieu à un relargage important des hydrocarbures absorbés;

– susceptible d'être détruit après usage et incinéré dans des fours de cimenterie;

– susceptible d'être obtenu à moindre coût à partir de matières peu onéreuses et par la mise en œuvre de procédés simples.

La présente invention a pour objet un matériau solide ayant des propriétés oléophiles et hydrofuges, ledit matériau qui continue à flotter après absorption d'huiles, caractérisé en ce qu'il consiste en un liant hydraulique ayant donné lieu à une prise par gâchage à l'eau en présence d'au moins un agent moussant et auquel est associé un agent hydrofuge, le volume de pores ouverts et le volume de pores total dudit matériau satisfaisant à la relation:

$$\frac{\text{volume de pores ouverts}}{\text{volume de pores total}} < \frac{1-d_A}{d_H(1-0,4d_A)}$$

avec:

$d_A$ = densité apparente du matériau;

$d_H$ = densité de l'huile à absorber.

Selon une forme d'exécution particulière de l'invention, le liant hydraulique est un ciment Portland et/ou un ciment alumineux.

Selon une forme d'exécution particulière de l'invention, l'agent moussant représente $10^{-3}$ à 3% en poids du ciment.

Selon une autre forme d'exécution particulière de l'invention, l'agent moussant est un des produits appartenant aux familles suivantes: les alcoylsulfates, las alcoylsulfonates, les alcoylarylsulfonates, les oxydes d'amines grasses, les produits polyoxyéthylènes et analogues.

Selon encore une autre forme particulière de l'invention, l'agent moussant est du laurylsulfate de sodium, de potassium ou d'ammonium.

Selon encore un autre mode de réalisation particulier, la densité apparente du matériau est comprise entre 0,10 et 0,50 et, de préférence, entre 0,15 et 0,35.

Suivant une forme d'exécution particulière de l'invention, le matériau, après durcissement du mélange de liant hydraulique, d'eau et d'agent moussant, est traité par un hydrofuge de surface.

Suivant une autre forme d'exécution particulière de l'invention, l'agent hydrofuge de surface appartient aux familles des cires en émulsion dans l'eau, silicones en émulsion dans l'eau ou en solution dans un solvant, ou produits hydrofugeants.

Suivant encore une autre forme d'exécution particulière de l'invention, l'hydrofuge de masse est ajouté au mélange de liant hydraulique, d'eau et d'agent moussant préalablement à sa prise.

Suivant une autre forme encore d'exécution particulière, l'agent hydrofuge de masse appartient aux familles des acides gras, acides naphténiques ou de leurs sels.

De préférence, l'agent hydrofuge de masse est de l'acide stéarique ou l'un de ses sels et il représente 0,1 à 10% et, de préférence, 0,5 à 2% du poids du ciment.

Selon l'invention, ce matériau contient éventuellement des adjuvants tels que stabilisants de mousse, accélérateurs de prise, défloculants, agents de cohésion et autres, les proportions de chacun des ces adjuvants, exprimés par rapport au poids du ciment étant comprises entre 0 et 3%.

Selon un autre mode de réalisation particulier, ce matériau contient une charge minérale ou organique, telle que sable broyé, calcaire broyé, fumes silicas, cendres volantes, billes de polystyrène expansé ou autres, les proportions de cette charge, exprimées par rapport au poids du ciment étant comprises entre 0 et 400%.

Selon un autre mode de réalisation particulier de l'invention, ce matériau a subi un autoclavage ou un étuvage.

Le matériau peut se présenter sous la forme de granules, cylindres, parallélépipèdes.

L'invention a également pour objet un procédé de récupération des parties cimentières et la valorisation de l'huile absorbée, contenues dans ledit matériau, après absorption d'huile, ces récupérations étant réalisées par incinération dans des fours de cimenterie et l'huile absorbée servant de combustible.

En fait, le matériau solide selon l'invention:

– est obtenu à partir d'un liant hydraulique, de préférence un ciment Portland et/ou un ciment alumineux, matières peu onéreuses et susceptibles d'être recyclés sans gêne dans des fours de cimenterie en reformant du ciment; à la température de cette opération, les hydrocarbures polluants sont complètement détruits et leur pouvoir calorifique est ainsi utilisé;

– permet l'absorption de une à plusieurs fois son poids d'huile en n'absorbant qu'une proportion relativement faible de l'ordre de 0 à 5% de son poids d'eau. Après pompage de l'huile, il continue à flotter à la surface de l'eau.

Le matériau selon l'invention est constitué à partir d'au moins un liant destiné à la prise par gâchage à l'eau et d'un agent moussant produisant le moussage de la pâte avant sa prise, c'est-à-dire, l'incorporation d'air sous forme de bulles, auquel est associé un agent hydrofuge. Ce moussage est favorisé par une agitation mécanique de la pâte avant son coulage dans des moules.

Le liant hydraulique est préférentiellement du ciment Portland mais peut aussi être du ciment alumineux ou leur mélange.

L'agent moussant est un produit tensio-actif, de préférence, au moins un des produits appartenant aux familles suivantes: alcoylsulfates, alcoylsulfonates, alcoylarylsulfonates, oxydes d'amines grasses, produits polyoxyéthylénés, protéines animales, végétales ou de synthèses. A titre d'exemple de cet agent moussant, on peut citer, les laurylsulfates de sodium, d'ammonium ou de potassium.

Pour 100 parties de ciment, on pourra utiliser 0,001 à 3 parties d'agent moussant et 45 à 125 parties d'eau.

L'hydrofugation du matériau peut être obtenu soit à l'aide d'un agent hydrofuge de masse, soit à l'aide d'un agent hydrofuge de surface.

L'agent hydrofuge de masse peut être tout produit connu conférant un caractère hydrofuge dont, à titre d'exemple, on peut citer les acides gras ($C_nH_{2n+1}COOH$) ou leurs sels, les acides naphténiques ($C_nH_{2n-1}COOH$) ou leurs sels, les huiles silicones. On choisira préférentiellement des stéarates, des oléates ou parmi les huiles silicones des silanes, des siloxanes ou des siliconates.

S'il est solide, l'agent hydrofugeant de masse peut être mélangé intimement à la poudre de ciment avant le gâchage avec l'eau et le tensio-actif; s'il est soluble dans l'eau, il sera préférentiellement dissout dans l'eau de gâchage.

Pour 100 parties de ciment, on pourra utiliser 0,1 à 10 parties d'hydrofuge de masse et préférentiellement 0,5 à 3 parties.

Dans le cas d'un agent hydrofuge de surface, on pourra utiliser tout produit connu conférant un caractère hydrofugeant; à titre d'exemple, on peut citer les cires en émulsion dans l'eau, les silicones en émulsion dans l'eau ou en solution dans un solvant, les produits hydrofugeants, ou le mélange de plusieurs de ces agents s'ils sont compatibles. Pour le traitement d'hydrofugation de surface, on prépare une solution avec des concentrations généralement inférieures à 5% dudit agent dans l'eau ou dans un solvant convenable. Après durcissement, la roche artificielle poreuse est trempée dans la solution, essorée, puis laissée à l'air jusqu'à son séchage complet.

La pâte de ciment moussée qui, après durcissement, permettra d'obtenir le matériau peut, en outre, contenir des adjuvants tels que stabilisants de mousse, accélérateurs de prise, défloculants, agent de cohésion.

Les proportions de chacun desdits adjuvants, exprimées par rapport au poids de liant, pourront être comprises entre 0 et 3%.

De préférence, le stabilisant de mousse qui a, en fait, des propriétés épaississantes, est formé de l'un des composés appartenant à la liste comprenant hydroxyéthylcellulose, carboxyméthylcellulose, méthylhydroxycellulose.

L'accélérateur de prise peut être du chlorure de calcium dans le cas de ciment Portlant et un sel de lithium dans le cas de ciment alumineux. Le défloculant, éventuellement employé, est formé de composés tels que lignosulfonates, résine mélamine, polynaphtalène formol sulfoné, tripolyphosphate, éthylènediamine tétraacétique.

L'agent de cohésion peut être un polymère, par exemple un copolymère d'acétate de vinyle et d'éthylène.

Il est possible de substituer au liant, un filler ou charge dans une proportion allant jusqu'à 80%, ledit filler pouvant être formé de matière minérale ou organique, par exemple de sable broyé, calcaire broyé, fume-silica, cendres volantes, billes de polystyrène expansé.

La préparation dudit matériau pourra être réalisée par mélange desdits constituants, l'agent hydrofuge étant appliqué par traitement de surface du matériau durci résultant ou étant ajouté initialement au mélange le constituant préalablement à la prise dudit matériau.

Les procédés permettant de préparer ce matériau peuvent être les mêmes que ceux classiquement utilisés pour faire des mousses de matières minérales. Citons, par exemple, des procédés qui consistent soit à mélanger tous les constituants avec un système de brassage permettant l'entraînement d'air, soit à préparer séparément la mousse à l'aide d'un générateur de mousse et à l'incorporer lors du malaxage de la pâte. Egalement, on peut mettre les différents constituants dans une jarre avec une charge broyante et laisser tourner cette jarre sur un tournemoule pendant un temps de 15 à 90 minutes.

On pourra aussi utiliser tout autre procédé de mélange et de moussage de la pâte; la pâte est ensuite versée dans des moules et le durcissement s'effectue à température ambiante quoiqu'un étuvage ou un autoclavage soit également possible.

Si l'on veut obtenir le matériau sous forme de petits morceaux (de quelques cm$^3$) ou de granules (de quelques dizièmes de cm$^3$), il sera préférable de découper le matériau quelques heures seulement après la prise, alors que ses résistances mécaniques ne sont pas trop élevées. Ce découpage peut se faire facilement en faisant passer le bloc à travers un calibre constitué par des cordes à piano tendues sur un cadre.

Les matériaux de la présente invention pourront présenter une densité apparente comprise entre 0,10 et 0,50 et de préférence entre 0,15 et 0,35.

Ils pourront présenter une porosité totale de 84 à 96% du volume avec une partie de cette porosité qui est ouverte et une autre partie qui est fermée et sont susceptibles de flotter après absorption des huiles. En faisant varier les différents paramètres de préparation du matériau (compositions, conditions expérimentales), on peut obtenir des roches artificielles de différentes densités et pour lesquelles le volume de la porosité ouverte peut être une fraction variable de la porosité totale; les matériaux de la présente invention satisfont à la relation:

$$\frac{\text{volume de pores ouverts}}{\text{volume de pores total}} < \frac{1-d_A}{d_H(1-0,4d_A)}$$

L'invention concerne également l'utilisation dudit matériau pour l'absorption des huiles flottant à la surface des eaux douces ou salines.

D'autres buts et avantages de l'invention apparaîtront à la lecture de la description des exemples illustratifs suivants.

Exemples 1 à 5

Matériaux hydrofugés en surface

Les solutions aqueuses des adjuvants sont versées sur la poudre de liant et la pâte obtenue est malaxée vigoureusement pendant deux à quatre minutes avec un mélangeur à double pales. La pâte obtenue est versée dans des moules. Après durcissement et séchage, les produits moulés obtenus subissent un traitement d'hydrofugation de surface de type T1 ou de type T2.

Le traitement T1 consiste à préparer une cire en émulsion (une partie de MOBILCER 72 – produit vendu par la Société MOBIL OIL) dans dix neuf parties d'eau, puis on immerge les produits moulés pendant une minute, ces produits étant alors essorés puis laissés à sécher dans l'air pendant quelques jours.

Le traitement T2 consiste à plonger les produits moulés pendant une minute dans une solution à 5% d'huile de silicones dans un solvant consistant en du White Spirit, les produits moulés étant alors essorés et laissés à sécher dans l'air pendant quelques jours.

Afin de mesurer les qualités hydrophobes et oléophiles du matériau, les tests de reprise d'eau et de reprise d'huile ont été faits séparément. Suivant les cas, a été utilisée de l'eau salée (30 g de NaCl par litre) ou une huile qui à 20°C présente une viscosité égale à 127 centipoises(m·Pa·s) et une densité de 0,936. Les conditions mises en œuvre et les résultats obtenus sont consignés dans les tableaux ci-dessous.

Pour chaque mesure, un produit moulé dont le volume est compris entre 5 et 10 cm$^3$ est pesé, déposé à la surface d'une feuille de papier filtre, puis repesé. La reprise de liquide est exprimée par le rapport de l'augmentation de poids du produit moulé par rapport à son poids initial.

Pour les tests de flottabilité, on dépose sur la surface d'un bécher à moitié rempli d'eau salée, une couche d'huile d'environ 5 mm d'épaisseur. Les échantillons sont déposés à la surface et on observe vingt quatre heures plus tard si leur flottabilités est suffisante pour les maintenir en surface (indication «oui» dans le tableau).

Exemples 6 à 11

Matériaux hydrofugés en masse

Les agents hydrofugeants de masse sont tout d'abord intimement mélangés à la poudre de ciment puis on ajoute l'eau de gâchage dans laquelle sont dissous les agents moussants. Après le gâchage (jusqu'à obtention d'une suspension homogène), on introduit les différents constituants dans une jarre avec une charge broyante et on laisse tourner la jarre pendant 1 heure à 2 tours par seconde. La pâte est ensuite versée dans des moules. Après durcissement (15 jours), les échantillons 6 à 10 sont démoulés puis laissés à l'air pour le séchage (au moins 1 jour).

L'échantillon de l'exemple 11 a été démoulé 24 heures après le moulage puis a été autoclavé pendant 6 heures à 180°C.

Les tests de reprise d'huile et de flottabilité sont menés dans les mêmes conditions opératoires que pour les exemples précédents. Pour les tests des exemples 6 à 11, les mesures de la reprise d'eau n'ont pas été effectuées de façon précise; il est apparu cependant qu'elles sont de l'ordre des valeurs obtenues pour les exemples 1 à 5.

Exemples 12 à 16

Ces exemples témoins sont donnés à titre comparatif. L'exemple 16 est mis en œuvre sur un produit appelé Filton® vendu dans le commerce.

Le matériau de l'exemple 12 a une densité supérieure à 0,5; il absorbe peu d'eau et après absorption d'huile, il continue à flotter. Il entre donc dans le cadre de la présente invention, mais se révèle économiquement inintéressant, car il absorbe une quantité trop faible d'huile.

Les matériaux selon les exemples 13 à 16 ont une capacité d'absorption d'huile satisfaisante, mais ils présentent l'inconvénient de couler au fond de l'eau. Ils échappent donc à la définition de l'invention et en fait ne satisfont pas à la relation:

Tableau I

| No. de l'essai | Composition de la mousse | | | Hydrofugation de surface | | reprise d'eau (en % du poids) | reprise d'huile (en % du poids) | Propriétés du matériau | | |
|---|---|---|---|---|---|---|---|---|---|---|
| | Ciment | Eau | Adjuvants | Traitement | densité apparente | | | flotta-bilité | $p_o/p_t$ | $\dfrac{1-d_A}{d_H(1-0,4\,d_A)}$ |
| 1 | Portland 900 g Alumineux 100 g | 1000 g | Lauryl sulfate de sodium 25 g | T1 | 0,17 | 1,8 | 320 | OUI | 0,78 | 0,95 |
| 2 | Portland 1000 g | 800 g | Lauryl sulfate de sodium 9,6 g | T2 | 0,25 | 2,6 | 266 | OUI | 0,86 | 0,89 |
| 3 | Portland 100 g | 750 g | Lauryl sulfate de sodium 3,75 g / Agilplast* 5,35 g / Silicate de soude 5 g | T1 | 0,27 | 3,9 | 162 | OUI | 0,81 | 0,87 |
| 4 | Portland 1000 g | 700 g | Lauryl sulfate de sodium 3,5 g | T2 | 0,30 | 1,2 | 148 | OUI | 0,77 | 0,85 |
| 5 | Portland 1000 g | 700 g | Lauryl sulfate de sodium 3,5 g / Agilplast* 5 g / Silicate de soude 5 g / Vinnapas RE 526** 10 g | T1 | 0,38 | 3,2 | 124 | OUI | 0,71 | 0,78 |

\* Agilplast: agent fluidifiant à base de résine polynaphtalène-formol sulfoné fourni par la Société CHRYSO
\*\* Vinnapas RE 526: copolymère d'acétate de vinyle/éthylène fourni par la Société WACKER-CHEMIE
\*\*\* $p_o/p_t$: volume de pores ouverts/volume de pores total.

Tableau II

| No. de l'essai | Composition de la mousse | | | Hydrofugation de surface | | reprise d'eau | reprise d'huile | Propriétés du matériau | | |
|---|---|---|---|---|---|---|---|---|---|---|
| 6 | Portland 1000 g | 800 g | Lauryl sulfate de sodium 5 g / Stéarate d'ammonium 10 g | masse | 0,24 | | 172 | OUI | 0,59 | 0,90 |
| 7 | Portland 1000 g | 800 g | Lauryl sulfate de sodium 5 g / Stéarate de calcium 20 g | masse | 0,29 | | 162 | OUI | 0,67 | 0,86 |

Tableau II (suite)

| No. de l'essai | Ciment | | Eau | Adjuvants | | Traite-ment en | densité apparente | reprise d'eau (en % du poids) | reprise d'huile (en % du poids) | flotta-bilité | $p_o/p_t$ | $\dfrac{1-d_A}{d_H(1-0,4\,d_A)}$ |
|---|---|---|---|---|---|---|---|---|---|---|---|---|
| 8 | Portland | 1000 g | 800 g | Laurylsulfate de sodium<br>Stéarate de calcium | 5 g<br>10 g | masse | 0,23 | | 287 | OUI | 0,88 | 0,91 |
| 9 | Portland | 1000 g | 800 g | Lauryl sulfate de sodium<br>Oléate de potassium | 5 g<br>10 g | masse | 0,32 | | 111 | OUI | 0,55 | 0,83 |
| 10 | Portland | 1000 g | 1200 g | Lauryl sulfate de sodium<br>Stéarate de magnésium | 5 g<br>30 g | masse | 0,21 | | 298 | OUI | 0,83 | 0,92 |
| 11 | Portland<br>Fume Silica | 750 g<br>250 g | 1250 g | Lauryl sulfate de sodium<br>Stéarate de calcium | 5 g<br>10 g | masse | 0,15 | | 362 | OUI | 0,72 | 0,97 |
| 12 | Alumineux | 1000 g | 750 g | Lauryl sulfate de Na | 3,75 g | surface T1 | 0,55 | 3,6 | 28 | OUI | 0,27 | 0,62 |
| 13 | Portland | 1000 g | 600 g | Diméthylcoprahamine oxyde | 0,5 g | surface T1 | 0,35 | 3,6 | 125 | NON | 0,90 | 0,81 |
| 14 (témoin) | Portland | 1000 g | 600 g | Diméthylcoprahamine oxyde | 0,5 g | sans | 0,35 | 96 | 110 | NON | 0,90 | 0,81 |
| 15 (témoin) | Portland | 1000 g | 800 g | Laurylsulfate de Na<br>Polynaphthalèneformol-sulfonate 2,2 g – $CaCl_2$ | 5,6 g<br>5,6 g | sans | 0,23 | 223 | 247 | NON | 0,93 | 0,91 |
| 16 | Filton® (produit du commerce) | | | | | surface | 0,57 | 0,5 | 125 | NON | 0,96 | 0,60 |

## Revendications

1. Un matériau solide ayant des propriétés oléophiles et hydrofuges, ledit matériau qui continue à flotter après absorption d'huiles, caractérisé en ce qu'il consiste en un liant hydraulique ayant donné lieu à une prise par gâchage à l'eau en présence d'au moins un agent moussant et auquel est associé un agent hydrofuge, le volume de pores ouverts et le volume de pores total dudit matériau satisfaisant à la relation:

$$\frac{\text{volume de pores ouverts}}{\text{volume de pores total}} < \frac{1-d_A}{d_H(1-0,4d_A)}$$

avec:

$d_A$ = densité apparente du matériau;
$D_H$ = densité de l'huile à absorber.

2. Matériau selon la revendication 1, caractérisé en ce que le liant hydraulique est un ciment Portland ou un ciment alumineux ou leur mélange.

3. Matériau selon une quelconque des revendications 1 ou 2, caractérisé en ce que l'agent moussant représente $10^{-3}$ à 3% du poids du ciment.

4. Matériau selon une quelconque des revendications 1 à 3, caractérisé en ce que l'agent moussant est un des produits appartenant aux familles suivantes: les alcoylsulfates, les alcoylsulfonates, les alcoylarylsulfonates, les oxydes d'amines grasses, les produits polyoxyéthyléniques.

5. Matériau selon une quelconque des revendications 1 à 4, caractérisé en ce que l'agent moussant est du laurylsulfate de sodium, de potassium ou d'ammonium.

6. Matériau selon l'une quelconque des revendications 1 à 5, caractérisé en ce que la densité apparente est comprise entre 0,10 et 0,50.

7. Matériau selon la revendication 6, caractérisé en ce que la densité apparente est comprise entre 0,15 et 0,35.

8. Matériau selon une quelconque des revendications 1 à 7, caractérisé en ce que le produit, après durcissement du mélange de liant hydraulique, d'eau et d'agent moussant, est traité par un agent hydrofuge de surface.

9. Matériau selon la revendication 8, caractérisé en ce que l'agent hydrofugeant de surface appartient aux familles des cires en émulsion dans l'eau, silicones en émulsion dans l'eau ou en solution dans un solvant, ou produits hydrofugeants.

10. Matériau selon une quelconque des revendications 1 à 7, caractérisé en ce que l'hydrofuge de masse est ajouté au mélange de liant hydraulique, d'eau et d'agent moussant, préalablement à sa prise.

11. Matériau selon la revendication 10, caractérisé en ce que l'agent hydrofuge de masse appartient aux familles des acides gras, acides naphténiques ou de leurs sels.

12. Matériau selon la revendication 11, caractérisé en ce que l'agent hydrofuge de masse est de l'acide stéarique ou l'un de ses sels.

13. Matériau selon les revendications 11 ou 12, caractérisé en ce que l'agent hydrofuge de masse représente 0,1 à 10% du poids du ciment.

14. Matériau selon les revendications 11 ou 12, caractérisé en ce que l'agent hydrofugeant de masse représente 0,5 à 3% du poids du ciment.

15. Matériau selon une quelconque des revendications 1 à 14, caractérisé en ce que l'on a utilisé pour sa réalisation des adjuvants tels que stabilisants de mousse, accélérateurs de prise, défloculants, agents de cohésion et autres, les proportions de chacun des ces adjuvants, exprimés par rapport au poids du ciment étant comprises entre 0 et 3%.

16. Matériau selon une quelconque des revendications 1 à 15, caractérisé en ce qu'il contient une charge minérale ou organique, telle que sable broyé, calcaire broyé, fumes silicas, cendres volantes, billes de polystyrène expansé, les proportions de cette charge, exprimées par rapport au poids du ciment étant comprises entre 0 et 400%.

17. Matériau selon une quelconque des revendications 1 à 16 ayant subi un étuvage ou un autoclave.

18. Utilisation du matériau selon une quelconque des revendications 1 à 17 pour l'absorption des hydrocarbures, fuels, huiles et graisses polluant les eaux douces ou les eaux de mer, ledit matériau se présentant sous la forme de granules, cylindres, parallélépipèdes.

19. Procédé de récupération des parties cimentières et de valorisation de l'huile absorbée contenues dans ledit matériau utilisé selon la revendication 18 par incinération dans des fours de cimenterie, l'huile absorbée servant de combustible.

## Patentansprüche

1. Festwerkstoff mit oleophilen (ölanziehenden) und hydrophoben (wasserabstossenden) Eigenschaften, der nach Ölabsorption weiterhin schwimmt, dadurch gekennzeichnet, dass er ein hydraulisches Bindemittel enthält, das vermittels Anrührens mit Wasser in Gegenwart wenigstens eines Schaumbildners das Abbinden bewirkt hat, wobei ferner ein wasserabstossendes Mittel beigemengt ist und das Volumen offener Poren, in bezug auf das Volumen geschlossener Poren des Feststoffes der Beziehung:

$$\frac{\text{Volumen offener Poren}}{\text{Volumen geschlossener Poren}} < \frac{1-d_A}{d_H(1-0,4d_A)}$$

entspricht, worin:

$d_A$ = Schüttdichte des Werkstoffs;
$d_H$ = Dichte des zu absorbierenden Öls.

2. Werkstoff nach Anspruch 1, dadurch gekennzeichnet, dass das hydraulische Bindemittel aus einem Portlandzement, einem Tonerdezement oder einem Gemisch derselben besteht.

3. Werkstoff nach einem der Ansprüche 1 und 2, dadurch gekennzeichnet, dass das Gewicht des Schaumbildners $10^{-3}$ bis 3% des Gewichts des Zements ausmacht.

4. Werkstoff nach einem der Ansprüche 1 bis 3, dadurch gekennzeichnet, dass der Schaumbildner eine den folgenden Kategorien zugehörige Substanz ist: Alkylsulfate, Alkylsulfonate, Alkylarylsulfonate, Fettaminoxyde, Polyoxyäthylenverbindungen.

5. Werkstoff nach einem der Ansprüche 1 bis 4, dadurch gekennzeichnet, dass der Schaumbildner aus Natrium-, Kalium- oder Ammoniumlaurylsulfonat besteht.

6. Werkstoff nach einem der Ansprüche 1 bis 5, dadurch gekennzeichnet, dass die Schüttdichte 0,10 bis 0,50 beträgt.

7. Werkstoff nach Anspruch 6, dadurch gekennzeichnet, dass die Schüttdichte 0,15 bis 0,35 beträgt.

8. Werkstoff nach einem der Ansprüche 1 bis 7, dadurch gekennzeichnet, dass das Erzeugnis nach der Erhärtung des aus hydraulischem Bindemittel, Wasser und Schaumbildner bestehenden Gemischs mit einem wasserabstossenden Oberflächenmittel behandelt wird.

9. Werkstoff nach Anspruch 8, dadurch gekennzeichnet, dass das wasserabstossende Oberflächenmittel zu folgenden Kategorien gehört: Wachsemulsionen in Wasser, Silikonemulsionen in Wasser oder in Lösung in einem Lösungsmittel, oder auch wasserabstossende Substanzen.

10. Werkstoff nach einem der Ansprüche 1 bis 7, dadurch gekennzeichnet, dass das wasserabstossende Massen-Mittel dem aus hydraulischem Bindemittel, Wasser und Schaumbildner bestehenden Gemisch vor dem Abbinden beigemengt wird.

11. Werkstoff nach Anspruch 10, dadurch gekennzeichnet, dass das wasserabstossende Massen-Mittel zu den Kategorien der Fettsäuren, der Naphthensäuren oder deren Salzen gehört.

12. Werkstoff nach Anspruch 11, dadurch gekennzeichnet, dass das wasserabstossende Massen-Mittel aus Stearinsäure oder einem Salz derselben besteht.

13. Werkstoff nach Anspruch 11 oder 12, dadurch gekennzeichnet, dass das wasserabstossende Massen-Mittel 0,1 bis 10% des Zementgewichts ausmacht.

14. Werkstoff nach Anspruch 11 oder 12, dadurch gekennzeichnet, dass das wasserabstossende Massen-Mittel 0,5 bis 3% des Zementgewichts ausmacht.

15. Werkstoff nach einem der Ansprüche 1 bis 14, dadurch gekennzeichnet, dass man zu seiner Herstellung Zusatzstoffe wie Schaumstabilisatoren, Abbindungsbeschleuniger, Entflockungsmittel, Kohäsionsmittel und dergleichen verwendet, wobei die auf das Zementgewicht bezogene Menge eines jeden dieser Zusatzstoffe zwischen 0 und 3% liegt.

16. Werkstoff nach einem der Ansprüche 1 bis 15, dadurch gekennzeichnet, dass er einen anorganischen oder organischen Zuschlagstoff wie zermahlener Sand, zermahlener Kalkstein, Silikatschwaden, Flugasche, Polystyrenschaumkugeln enthält, wobei die Menge dieses Zuschlagstoffes in bezug auf das Zementgewicht 0 bis 400% beträgt.

17. Werkstoff nach einem der Ansprüche 1 bis 16, der in einem Trockenofen oder in einem Autoklaven behandelt worden ist.

18. Verwendung des Werkstoffs nach einem der Ansprüche 1 bis 17 zur Absorption von Kohlenwasserstoffen, Brennstoffen, Ölen und Fettsubstanzen, die das Süsswasser oder das Meerwasser verunreinigen, wobei dieser Werkstoff in Form von Körnern, Zylindern, Parallelepipeden vorliegt.

19. Verfahren zur Rückgewinnung der Zementanteile und zur Wiederverwendung des in dem Werkstoff enthaltenen absorbierten Öls nach Einsatz des Werkstoffs zwecks dessen Verwendung nach Anspruch 18, durch Verbrennung in Zementöfen, wobei das absorbierte Öl als Brennstoff dient.

**Claims**

1. A solid material having olephilic and hydrophobic properties and which is adapted to continue to float after absorption of oils, characterized in that it is constituted by a hydraulic binder adapted to cause setting upon mixing with water in the presence of at least one foaming agent, and to which a water-repellent agent is associated, the volume of open pores and the total volume of pores of said material meeting the relation:

$$\frac{\text{volume of open pores}}{\text{total volume of pores}} < \frac{1-d_A}{d_H(1-0,4_A)}$$

wherein:

$d_A$ = apparent density of the material;
$d_H$ = density of the oil to be absorbed.

2. Material according to claim 1, characterized in that the hydraulic binder is Portland cement or an aluminous cement or a mixture thereof.

3. Material according to any one of claims 1 and 2, characterized in that the foaming agent represents $10^{-3}$ to 3% of the weight of the cement.

4. Material according to any one of claims 1 to 3, characterized in hat the foaming agent is one of the products belonging to the following families: alkylsulphates, alkylsulphonates, alkylarylsulphonates, fatty amine oxides, polyoxyéthylene products.

5. Material according to any one of claims 1 to 4, characterized in that the foaming agent is sodium laurylsulphate, potassium laurylsulphate or ammonium laurylsulphate.

6. Material according to any one of claims 1 to 5, characterized in that its apparent (or bulk) density is comprised between 0.10 and 0.50.

7. Material according to claim 6, characterized in that its apparent (or bulk) density is comprised between 0.15 and 0.35.

8. Material according to any one of claims 1 to 7, characterized in that the product, after the hardening of the mixture of hydraulic binder, water and foaming agent, is treated with a surface water-repellent agent.

9. Material according to claim 8, characterized in that the mass water-repellent agent belongs to the families of waxes emulsified in water, silicones emulsified in water or dissolved in a solvent, or water-repellent products.

10. Material according to any one of claims 1 to 7, characterized in that the mass water-repellent agent is added to the mixture of hydraulic binder, water and foaming agent prior to its setting.

11. Material according to claim 10, characterized in that the mass water-repellent agent belongs to the family of fatty acids, naphthenic acids or their salts.

12. Material according to claim 10, characterized in that the mass water-repellent agent is stearic acid or one of its salts.

13. Material according to claim 11 or 12, characterized in that the mass water-repellent agent represents 0.1 to 10% of the weight of the cement.

14. Material according to claim 11 or 12, characterized in that the mass water-repellent agent represents 0.5 to 3% of the weight of the cement.

15. Material according to any one of claims 1 to 14, characterized in that, for preparing said material, additives have been used, such as foam stabilizers, setting accelerators, deflocculating agents, cohesion agents and other substances, the amount of each one of said additives, expressed with respect to the weight of the cement, being comprised between 0 and 3%.

16. Material according to any one of claims 1 to 15, characterized in that it contains an inorganic or organic filler material, such as crushed sand, crushed lime stone, silica fumes, fly ashes, expanded polystyrene beads, the proportions of said fillers, expressed with respect to the weight of the cement, being comprised between 0 and 400%.

17. Material according to any one of claims 1 to 16, which has been treated in a drying oven or an autoclave.

18. Utilisation of the material according to any one of claims 1 to 17 for absorbing hydrocarbons, fuels, oils and fatty substances polluting soft water or sea water, said material presenting the shape of granules, cylinders, parallelepipeds.

19. Process of recovering cement portions and of rendering exploitable the absorbed oil contained in said material when used in accordance with claim 18, comprising incinerating in cement ovens, while the absorbed oil acts as a fuel.